# EUROPEAN PATENT APPLICATION

(11) **EP 1 122 687 A2**
(43) Date of publication of application: **08.08.2001**
(21) Application number: 01101621.9
(22) Date of filing: 25.01.2001
(51) Int. Cl.: G06N 3/00

(54) **Emotion expressing device**

(30) Priority: 25.01.2000 JP 2000018026
(71) Applicant: NEC CORPORATION, Tokyo (JP)
(72) Inventor: Ibeke, Ryohji, Minato-ku, Tokyo (JP); Hirai, Sanae, Minato-ku, Tokyo (JP)
(74) Representative: VOSSIUS & PARTNER

(57) **Abstract**

The emotion expressing device comprises an emotion creating device (200) which decides an emotion, a sound creating device for creating a sound for representing the emotion, an emotional interactive statement creating device (400) which creates words for representing the emotion, a movement creating device (500) which creates a movement for representing the emotion, an expression creating device (600) which creates an expression for representing the emotion, and an expression information integrating device (800) which performs the layout processing and the output synchronization processing in output of the created sound, words, movement, and expression.

## Description

The present invention relates to an interactive device between a computer and a user, and more particularly to an emotion expressing device for expressing emotion of an imaginary creature by creating and supplying expression, movements, words and sound of the imaginary creature.

Hitherto, a user interface formed by an imaginary creature created by the computer graphics, that is, an artificial agent is known as an interactive information input/output device. An imaginary creature is displayed on a screen of a computer, so to interact with a user by using the emotion, movements, and sound, thereby realizing a natural interactive operation of the computer as if a user spoke to a person.

As the technique for giving human emotion to an artificial agent to establish a natural interaction with a user, Japanese Patent Publication (Kokai) No. Heisei 06-12401, "Emotion Simulation Device" is known.

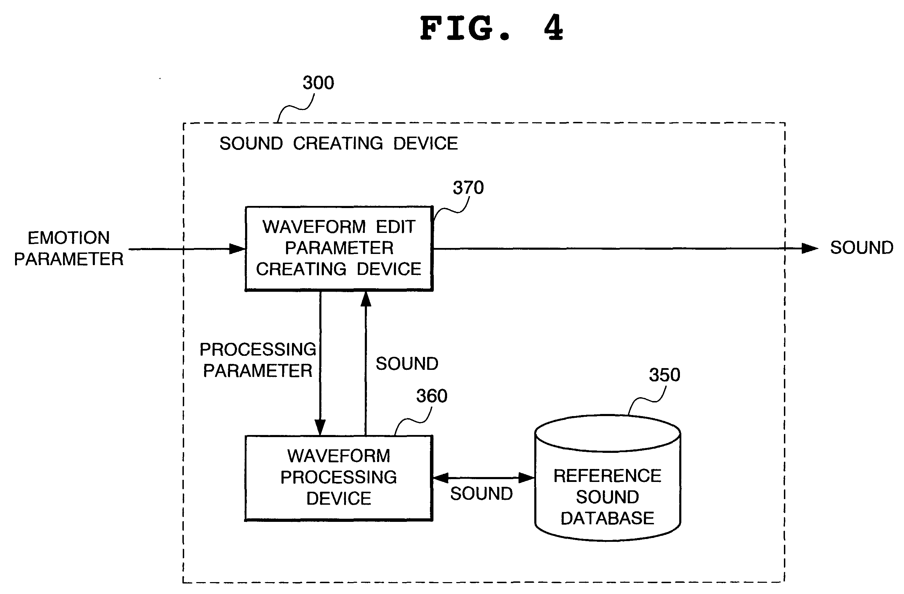

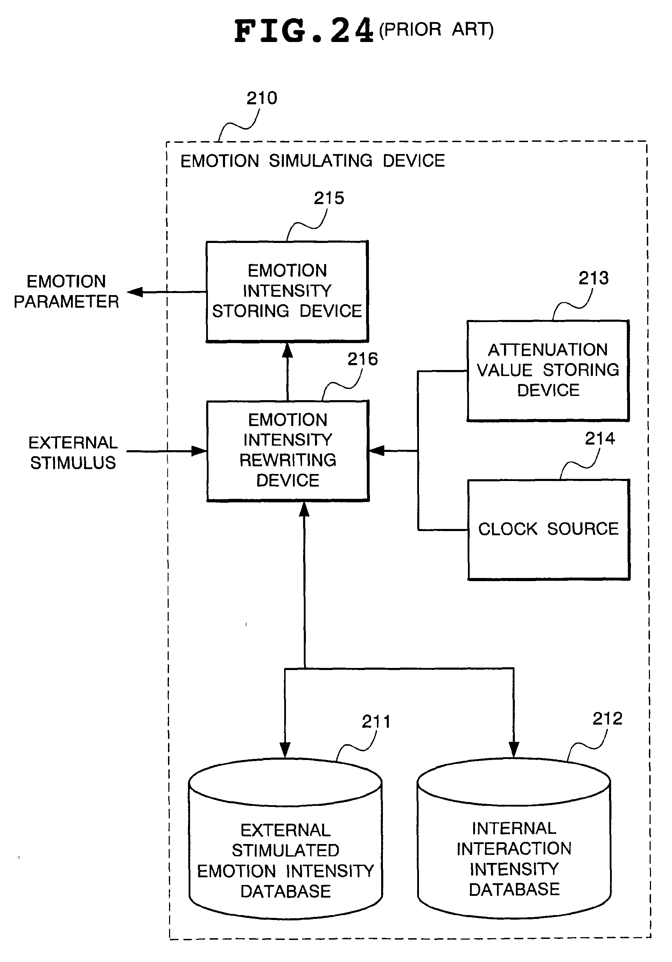

This technique is described in Fig. 24 (cited from Fig. 4, page 6 of the above publication). This emotion simulating device 210 is a device for creating emotion in response to an external stimulus, which comprises an external stimulated emotion intensity database 211 for storing a rule of fluctuations in the elemental emotional value according to the external stimulus, an internal interaction intensity database 212 for storing the fluctuations in the elemental emotional value according to an element emotional interactive influence, an attenuation value storing device 213 for storing the attenuation of the elemental emotional value according to the elapse of time, a clock source 214 for clocking the timing of rewriting the element emotion intensity value, and an emotion intensity storing device 215 for storing the element emotion intensity value, and an emotion intensity value rewriting device 216 for rewriting the element emotion intensity value upon receipt of the stimulus from the external environment, the element emotion interactive influence and the elapse of time.

The element emotion includes surprise, anger, pleasure, grief and the like. The emotion is represented by the numerical values corresponding to the above element emotions, in other words, the element emotion intensity values. It means that the greater the element emotion intensity value is, the stronger the elemental emotion is, and when each element emotion intensity value is zero, it means that each elemental emotion is in the "neutral" state.

The external stimulus means "user utter, task plan, task execution, and task achievement".

The external stimulated emotion intensity database 211 is to store a rule for increasing and decreasing each element emotion intensity value in response to the external stimulus and store a pair of the content of the external stimulus and the fluctuations in the element emotion intensity values. The rule is established, for example, like "there is no reply from a user in spite of an agent's repeated input request to the user→the value of the elemental emotion "anger" is increased by 2 units", and "the requested schedule arrangement is completed by the operation of the agent→ the value of the element emotion "pleasure" is increased by one unit".

The internal interaction intensity database 212 is to store a parameter group of the element emotion intensity values according to the element emotion interactive influence as for each phenomenon such that pleasure heals grief or that anger destroys pleasure.

The attenuation value storing device 213 will be described. When there is no external stimulus and the interaction between each element emotion is small, the emotion of an agent shifts to the calm neutral state with time. The attenuation value storing device 213 is to store each constant assuming that each element emotion intensity value decreases exponentially with time.

The emotion intensity storing device 215 is a device for storing the intensity value of each element emotion therein. The element emotion intensity values stored in the emotion intensity storing device 215 is supplied to the outward as the emotion parameter.

The emotion intensity value rewriting device 216 is to rewrite the element emotion intensity values stored in the emotion intensity storing device 215, according to the attenuation rule of the element emotion intensity values by the attenuation value storing device 213 and the rule of the fluctuations in the element emotion intensity values stored in the external stimulated emotion intensity database 211 and the internal interaction intensity database 212, in accordance with the timing of a signal issued from the clock source 214.

As described above, the emotion simulation device 210 simulates human emotions according to a stimulus from the external environment, the internal emotion of itself, and the elapse of time.

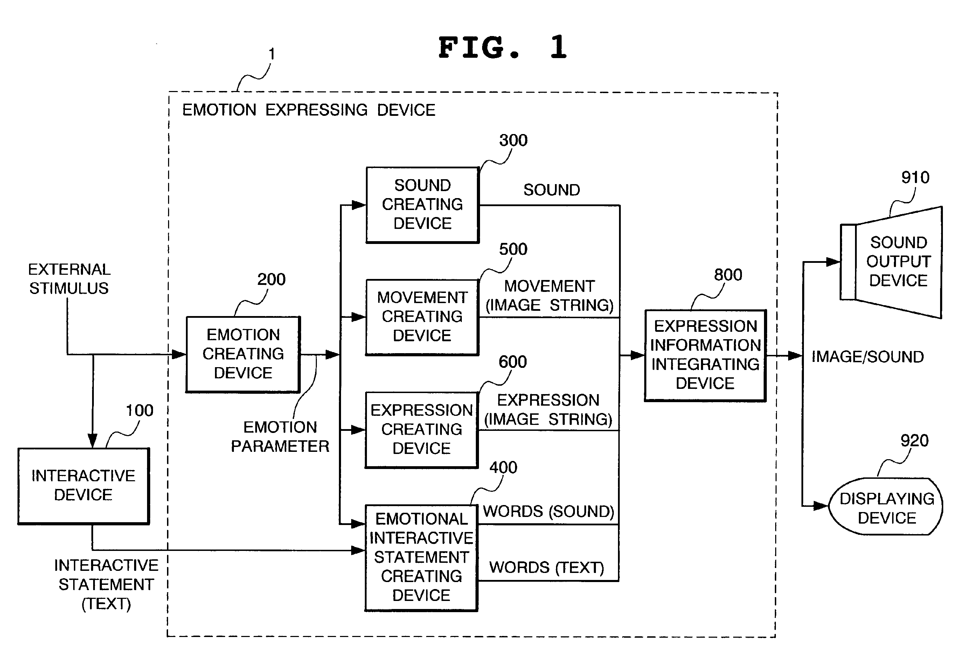

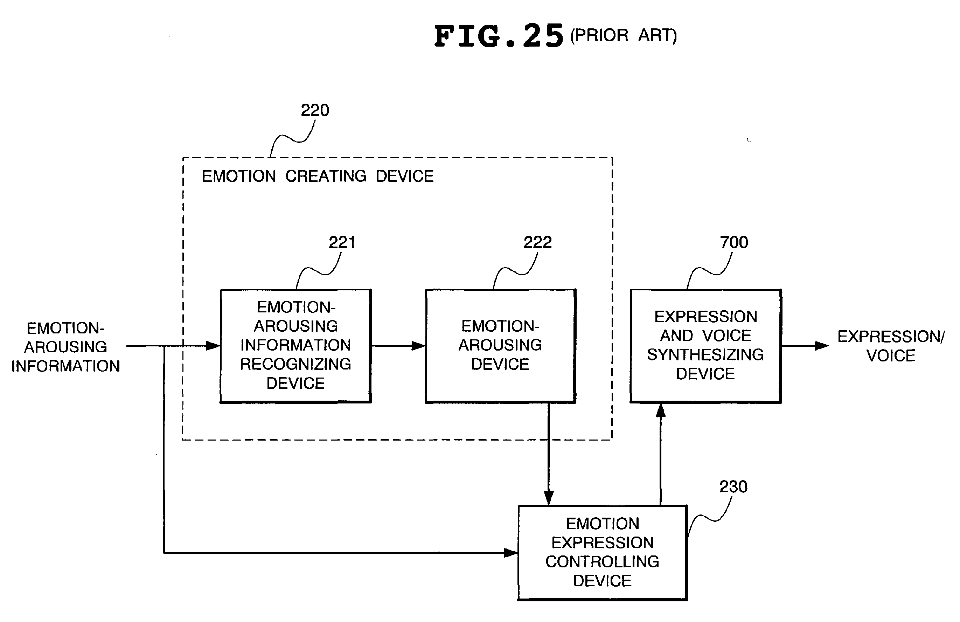

On the other hand, as the technique for varying the expression style of emotion depending on the circumstances, "Feeling Expressing Device" described in Japanese Patent Publication (Kokai) No. Heisei 7-104778 is known. The outline of the feeling expressing device described in the above publication (Fig. 1, page 10) is shown in Fig. 25. The feeling expressing device comprises a feeling creating device 220 for creating feeling from the received feeling-arousing information, a feeling expression controlling device 230 for deciding an expression and a voice to be displayed, and an expression and voice synthesizing device 700 for varying and outputting the rhythm of a voice and an expression. In this technique, use of the feeling expression controlling device 230 enables a user to intentionally change the expression style of the feeling and enables a system itself to automatically change the above depending on the environmental information and history information. Thus, as for the same feeling created by the feeling creating device 220, different expression style of an expression and a voice can be selected and a variety of expressions and voices are possible.

Thanks to the above technique, an artificial agent can be provided with human feeling and it can react to a user variously depending on the feeling. However, a means for expressing the feeling is restricted to only a change in the rhythm of a voice and an expression. Therefore, it is difficult for a user to understand what emotion an artificial agent holds at interaction, and it is difficult to realize a humanly delicate interaction.

In order to solve the above conventional defect, an object of the present invention is to provide an emotion expressing device capable of user's easy understanding of the emotion of an artificial agent and realizing a delicate interaction.

According to one aspect of the invention, an emotion expressing device comprises
an emotion creating device for deciding and supplying an emotion parameter of an artificial agent;
an expression information integrating device for performing layout processing and output synchronization processing in sound and image output according to a multimedia scenario, and further comprising at least one of
a sound creating device for creating a sound for representing emotion based on the emotion parameter supplied from the emotion creating device, an emotional interactive statement creating device for creating words for representing emotion based on the emotion parameter, and a movement creating device for creating movements for representing emotion based on the emotion parameter.

In this structure, a movement creating device for creating and displaying movements is further provided in addition to the expression creating device for creating an important expression when a human reads emotions. Further, because of being provided with an emotional interactive statement creating device, it is possible to create emotional words such as "yahoo!" and "boo, boo!" in accordance with the emotion of an artificial agent and change the expression of the interactive statement in accordance with the emotion. Further, because of being provided with a sound creating device, it is possible to create a sound for expressing emotion. A sound enables a user not only to feel the emotion of an artificial agent but also to guess whether the utterance following the sound is of good matter or bad matter before listening to the utterance. Further, because of being provided with an expression information integrating device, it is possible to perform synchronization processing and layout processing of sound, voice, expression, and movements and also enhance the effect of emotional expression using decorative character and balloon for display of the words. Since it is provided with various expressing means, a user can easily understand the emotion of an artificial agent, resulting in realizing a delicate interaction.

In the preferred construction, the emotion expressing device further comprises an expression creating device for creating an expression for representing emotion based on the emotion parameter supplied from the emotion creating device.

In another preferred construction, the sound creating device includes a sound database for previously storing a plurality of sounds for representing emotions as sound data, and a sound selecting device for retrieving a sound corresponding to an input emotion parameter from the sound database.

In another preferred construction, the emotion expressing device further comprises an expression creating device for creating an expression for representing emotion based on the emotion parameter supplied from the emotion creating device, in which
the sound creating device includes a sound database for previously storing a plurality of sounds for representing emotions as sound data, and a sound selecting device for retrieving a sound corresponding to an input emotion parameter from the sound database.

In another preferred construction, the sound creating device includes a reference sound database for storing a reference sound to be subjected to waveform processing, a waveform edit parameter creating device for supplying a waveform edit parameter depending on an input emotion parameter, and a waveform processing device for performing amplitude envelope processing, pitch envelope processing, and effect processing of a reference sound stored in the sound reference database, according to the waveform edit parameter supplied from the waveform edit parameter creating device.

In another preferred construction, the emotion expressing device further comprises an expression creating device for creating an expression for representing emotion based on the emotion parameter supplied from the emotion creating device, in which
the sound creating device includes a reference sound database for storing a reference sound to be subjected to waveform processing, a waveform edit parameter creating device for supplying a waveform edit parameter depending on an input emotion parameter, and a waveform processing device for performing amplitude envelope processing, pitch envelope processing, and effect processing of a reference sound stored in the sound reference database, according to the waveform edit parameter supplied from the waveform edit parameter creating device.

In another preferred construction, the emotional interactive statement creating device includes at least one of
an emotional word creating device for creating an emotional word corresponding to an input emotion parameter and an interactive statement conversion device for converting an input interactive statement into an emotional interactive statement based on the emotion parameter.

In another preferred construction, the emotion expressing device further comprises an expression creating device for creating an expression for representing emotion based on the emotion parameter supplied from the emotion creating device, in which
the emotional interactive statement creating device includes at least one of
an emotional word creating device for creating an emotional word corresponding to an input emotion parameter and an interactive statement conversion device for converting an input interactive statement into an emotional interactive statement based on the emotion parameter.

In another preferred construction, the emotional interactive statement creating device includes an emotional word creating device for creating an emotional word corresponding to an input emotion parameter, an interactive statement conversion device for converting an input interactive statement into an emotional interactive statement based on the emotion parameter, and a words creating device for creating words in combination of an emotional word supplied from the emotional word creating device and an emotional interactive statement supplied from the interactive statement conversion device.

In another preferred construction, the emotion expressing device further comprises an expression creating device for creating an expression for representing emotion based on the emotion parameter supplied from the emotion creating device, in which
the emotional interactive statement creating device includes an emotional word creating device for creating an emotional word corresponding to an input emotion parameter, an interactive statement conversion device for converting an input interactive statement into an emotional interactive statement based on an emotion parameter, and a words creating device for creating words in combination of an emotional word supplied from the emotional word creating device and an emotional interactive statement supplied from the interactive statement conversion device.

In another preferred construction, the expression information integrating device
receives an emotion parameter, selects a multimedia scenario corresponding to the input emotion parameter from a plurality of multimedia scenarios prepared in advance, and according to the selected multimedia scenario, performs layout processing and output synchronization processing in sound and image output.

In another preferred construction, the emotion expressing device further comprises an expression creating device for creating an expression for representing emotion based on the emotion parameter supplied from the emotion creating device, in which
the expression information integrating device
receives an emotion parameter, selects a multimedia scenario corresponding to the input emotion parameter from a plurality of multimedia scenarios prepared in advance, and according to the selected multimedia scenario, performs layout processing and output synchronization processing in sound and image output.

In another preferred construction, the emotion expressing device comprises an emotion judging device for judging an emotion included in an input interactive statement and supplying the same as an emotion parameter, instead of the emotion creating device.

In another preferred construction, the emotion expressing device comprises an emotion judging device for judging an emotion included in an input interactive statement and supplying the same as an emotion parameter, instead of the emotion creating device,
the emotion judging device further includes a keyword extracting device for extracting keywords included in an input interactive statement, a keyword-emotion parameter correspondence table with each emotion parameter recorded correspondingly to each keyword, and a keyword-emotion parameter conversion device for supplying an emotion parameter recorded in the keyword-emotion parameter correspondence table correspondingly to a keyword extracted by the keyword extracting device.

According to another aspect of the invention, a computer readable memory for storing an emotion expressing program for expressing emotions of a virtual pseudo creature by controlling a computer,
the emotion expressing program comprises
a step of performing emotion creating processing for deciding and supplying an emotion parameter of an artificial agent,
a step of performing expression information integrating processing for performing layout processing and output synchronization processing in sound and image output according to a multimedia scenario, and
a step of performing at least one of sound creating processing for creating a sound for representing emotion based on the emotion parameter supplied through the emotion creating processing, emotional interactive statement creating processing for creating words for representing emotion based on the emotion parameter, and movement creating processing for creating movements for representing emotion based on the emotion parameter.

In the preferred construction, the emotion expressing program comprises a step of performing expression creating processing for creating an expression for representing emotion based on the emotion parameter supplied through the emotion creating processing.

In another preferred construction, the sound creating processing of the emotion expressing program includes sound selecting processing for retrieving a sound corresponding to an input emotion parameter from the sound database which previously stores a plurality of sounds for representing emotions as sound data.

In another preferred construction, the emotion expressing program comprises a step of performing expression creating processing for creating an expression for representing emotion based on the emotion parameter supplied through the emotion creating processing,
the sound creating processing includes sound selecting processing for retrieving a sound corresponding to an input emotion parameter from the sound database which previously stores a plurality of sounds for representing emotions as sound data.

In another preferred construction, the sound creating processing of the emotion expressing program includes waveform edit parameter creating processing for supplying a waveform edit parameter depending on an input emotion parameter, and waveform edit processing for performing amplitude envelope processing, pitch envelope processing, and effect processing of a reference sound stored in the sound reference database which stores reference sounds to be subjected to waveform edit, according to the waveform edit parameter supplied through the waveform edit parameter creating processing.

In another preferred construction, the emotion expressing program comprises a step of performing expression creating processing for creating an expression for representing emotion based on the emotion parameter supplied through the emotion creating processing,
the sound creating processing of the emotion expressing program includes waveform edit parameter creating processing for supplying a waveform edit parameter depending on an input emotion parameter, and waveform edit processing for performing amplitude envelope processing, pitch envelope processing, and effect processing of a reference sound stored in the sound reference database which stores reference sounds to be subjected to waveform edit, according to the waveform edit parameter supplied through the waveform edit parameter creating processing.

In another preferred construction, the emotional interactive statement creating processing of the emotion expressing program includes at least one of
emotional word creating processing for creating an emotional word corresponding to an input emotion parameter and interactive statement conversion processing for converting an input interactive statement into an emotional interactive statement based on the emotion parameter.

In another preferred construction, the emotion expressing program comprises a step of performing expression creating processing for creating an expression for representing emotion based on the emotion parameter supplied through the emotion creating processing,
the emotional interactive statement creating processing of the emotion expressing program includes at least one of
emotional word creating processing for creating an emotional word corresponding to an input emotion parameter and interactive statement conversion processing for converting an input interactive statement into an emotional interactive statement based on the emotion parameter.

In another preferred construction, the emotional interactive statement creating processing of the emotion expressing program includes emotional word creating processing for creating an emotional word corresponding to an input emotion parameter, interactive statement conversion processing for converting an input interactive statement into an emotional interactive statement based on the emotion parameter, and words creating processing for creating words in combination of an emotional word supplied through the emotional word creating processing and an emotional interactive statement supplied through the interactive statement conversion processing.

In another preferred construction, the emotion expressing program comprises a step of performing expression creating processing for creating an expression for representing emotion based on the emotion parameter supplied through the emotion creating processing,
the emotional interactive statement creating processing of the emotion expressing program includes emotional word creating processing for creating an emotional word corresponding to an input emotion parameter, interactive statement conversion processing for converting an input interactive statement into an emotional interactive statement based on the emotion parameter, and words creating processing for creating words in combination of an emotional word supplied through the emotional word creating processing and an emotional interactive statement supplied through the interactive statement conversion processing.

In another preferred construction, the expression information integrating processing of the emotion expressing program includes a step of receiving an emotion parameter, selecting a multimedia scenario corresponding to the input emotion parameter from a plurality of multimedia scenarios prepared in advance, and according to the selected multimedia scenario, performing layout processing and output synchronization processing in sound and image output.

In another preferred construction, the emotion expressing program comprises a step of performing expression creating processing for creating an expression for representing emotion based on the emotion parameter supplied through the emotion creating processing,
the expression information integrating processing of the emotion expressing program includes a step of receiving an emotion parameter, selecting a multimedia scenario corresponding to the input emotion parameter from a plurality of multimedia scenarios prepared in advance, and according to the selected multimedia scenario, performing layout processing and output synchronization processing in sound and image output.

In another preferred construction, the emotion expressing program comprises a step of performing emotion judging processing for judging an emotion included in an input interactive statement and supplying the same as an emotion parameter, instead of the emotion creating processing.

In another preferred construction, the emotion expressing program comprises a step of performing emotion judging processing for judging an emotion included in an input interactive statement and supplying the same as an emotion parameter, instead of the emotion creating processing,
the emotion judging processing further includes keyword extracting processing for extracting keywords included in an input interactive statement, and keyword-emotion parameter conversion processing for supplying an emotion parameter recorded in the keyword-emotion parameter correspondence table with each emotion parameter recorded correspondingly to each keyword, in accordance with the keyword extracted by the keyword extracting processing.

Other objects, features and advantages of the present invention will become clear from the detailed description given herebelow.

The present invention will be understood more fully from the detailed description given herebelow and from the accompanying drawings of the preferred embodiment of the invention, which, however, should not be taken to be limitative to the invention, but are for explanation and understanding only.

In the drawings:

Fig. 1 is a block diagram showing an embodiment of the emotion expressing device according to the present invention.

Fig. 2 is a block diagram for use in describing one of the constitutional examples of the sound creating device shown in Fig. 1.

Fig. 3 is a view showing the constitutional example of a sound correspondence table which a sound selecting device of the sound creating device shown in Fig. 2 refers to.

Fig. 4 is a block diagram showing another of the constitutional examples of the sound creating device shown in Fig. 1.

Fig. 5 is a view showing the constitutional example of an edit parameter correspondence table which a waveform edit parameter creating device of the sound creating device shown in Fig. 4 refers to.

Fig. 6 is a block diagram showing the constitutional example of the emotional interactive statement creating device shown in Fig. 1.

Fig. 7 is a view showing a constitutional example of the emotional word correspondence table which an emotional word selecting device of the emotional interactive statement creating device shown in Fig. 6 refers to.

Fig. 8 is a view showing another constitutional example of the emotional word correspondence table which the emotional word selecting device refers to.

Fig. 9 is a view showing the constitutional example of an interactive statement conversion table which an interactive statement conversion device of the emotional interactive statement creating device shown in Fig. 6 refers to.

Fig. 10 is a block diagram showing the constitutional example of the movement creating device shown in Fig. 1.

Fig. 11 is a view showing an example of a movement image string stored by a movement database of the movement creating device shown in Fig. 10.

Fig. 12 is a view showing a constitutional example of a movement correspondence table which the movement selecting device of the movement creating device shown in Fig. 10 refers to.

Fig. 13 is a block diagram showing a constitutional example of the expression creating device shown in Fig. 1.

Fig. 14 is a view showing an example of an expression image string stored by the expression database of the expression creating device shown in Fig. 13.

Fig. 15 is a view showing a constitutional example of an expression correspondence table which an expression selecting device of the expression creating device shown in Fig. 13 refers to.

Fig. 16 is a view showing an output example from an expression information integrating device shown in Fig. 1.

Fig. 17 is a view showing an output example from the expression information integrating device by use of a decorative character and a balloon.

Fig. 18 is a block diagram showing one of the constitutional examples of the expression information integrating device shown in Fig. 1.

Fig. 19 is a view showing an output example from the expression information integrating device according to the present invention.

Fig. 20 is a block diagram showing another constitution of the emotion expressing device of the present invention.

Fig. 21 is a block diagram showing a constitutional example of an emotion judging device shown in Fig. 20.

Fig. 22 is a view showing a constitutional example of a keyword-emotion parameter correspondence table which a keyword-emotion parameter conversion device of the emotion judging device shown in Fig. 21 refers to.

Fig. 23 is a block diagram showing one example of the hardware constitution of the emotion expressing device.

Fig. 24 is a block diagram showing a constitution of an emotion simulating device in the conventional technique.

Fig. 25 is a block diagram showing a constitution of the conventional emotional interactive device.

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

Fig. 1 is a block diagram showing the constitution of a first embodiment of the present invention. As illustrated in the same figure, this embodiment comprises an interactive device 100 for creating an interactive statement supplied by an artificial agent, in response to an external stimulus including user's utterance, an emotion expressing device 1 for creating emotions and creating an image and a sound for expressing the emotions, a sound output device 910 such as a speaker for supplying a sound, and a displaying device 920 such as a display for supplying an image.

The interactive device 100 is a device for creating an interactive plan for solving a given task, upon receipt of an external stimulus, and supplying an interactive statement based on the interactive plan, and it is a general existing interactive device.

In the same figure, the emotion expressing device 1 includes an emotion creating device 200 for deciding emotion, a sound creating device 300 for creating a sound for expressing the emotion, an emotional interactive statement creating device 400 for creating the words for expressing the emotion, a movement creating device 500 for creating movements for expressing the emotion, an expression creating device 600 for creating an expression for representing the emotion, and an expression information integrating device 800 for performing the layout processing and the output synchronizing processing at the output of the created sound, words, movements and expression.

The emotion creating device 200 is a device for outputting emotion parameters (the numerical values attached to each elemental emotion including surprise, anger, pleasure, and the like) in response to an external stimulus, and the emotion simulating device 210 or the feeling creating device 220 as mentioned in the conventional techniques can be used as the emotion creating device 200. The emotion parameters created by the emotion creating device 200 are supplied to the sound creating device 300, the emotional interactive statement creating device 400, the movement creating device 500, and the expression creating device 600.

The sound creating device 300 is characterized by supplying the sound data of a sound for expressing the emotion in response to an emotion parameter received from the emotion creating device 200. More specifically, when the emotion parameter showing high degree of pleasure is received, the sound creating device 300 supplies a joyful sound, and when the emotion parameter showing high degree of grief is received, it supplies a sad sound.

The emotional interactive statement creating device 400 is characterized by supplying words including emotional expression in the form of text data or sound data, depending on the emotion parameter received from the emotion creating device 200 and the interactive statement received from the interactive device 100. More specifically, the word for expressing emotion (for example, "boo, boo" for complaint, and "yahoo" for pleasure) is created and supplied based on the emotion parameter from the emotion creating device 200, and further the way of speaking the interactive statement, that is the other input to the emotional interactive statement creating device 400, is changed and supplied based on the emotion parameter (for example, how about...? Why don't you...? Should I...? etc.).

The movement creating device 500 supplies an image string of movements for expressing the emotion based on an emotion parameter received from the emotion creating device 200.

The expression creating device 600 supplies an image string of expressions for representing the emotion based on an emotion parameter received from the emotion creating device 200.

The expression information integrating device 800 receives a sound (sound data) that is an output from the sound creating device 300, text data and sound data of the words that are output from the emotional interactive statement creating device 400, a movement image string that is output from the movement creating device 500, and an expression image string that is output from the expression creating device 600, and arranges the layout of the data and the output synchronization to output in such a way that the sound output device 910 such as a speaker for supplying a sound and the displaying device 920 such as a display for supplying an image can supply the data.

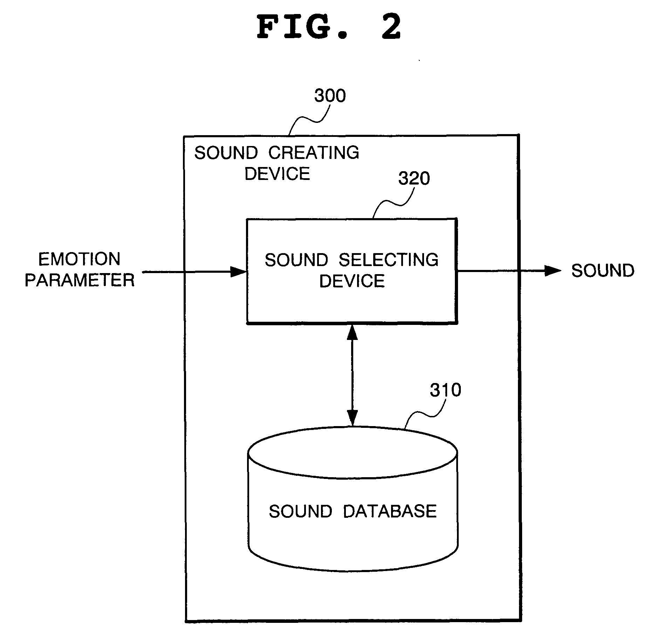

The detailed constitution and operation of the sound creating device 300, the emotional interactive statement creating device 400, the movement creating device 500, the expression creating device 600, and the expression information integrating device 800 will be described by using Figs. 2 to 18.

A concrete example of the sound creating device 300 will be described at first. Fig. 2 is a block diagram showing a first concrete example of the sound creating device 300.

The sound creating device 300 includes a sound database 310 for previously storing a plurality of the sounds of some animal for expressing emotions as the sound data and a sound selecting device 320 for retrieving the sound corresponding to the received emotion parameter from the sound database 310.

The sound of some animal means the sound for expressing the emotion of an artificial agent, for example, like the sound "sniff-sniff, vow, yap, and the like" of a dog. As for the sound to be treated here, any sound will do as far as an audience can guess the emotion of the artificial agent. The sound is not restricted to a realistic sound, but a synthesized sound can be used.

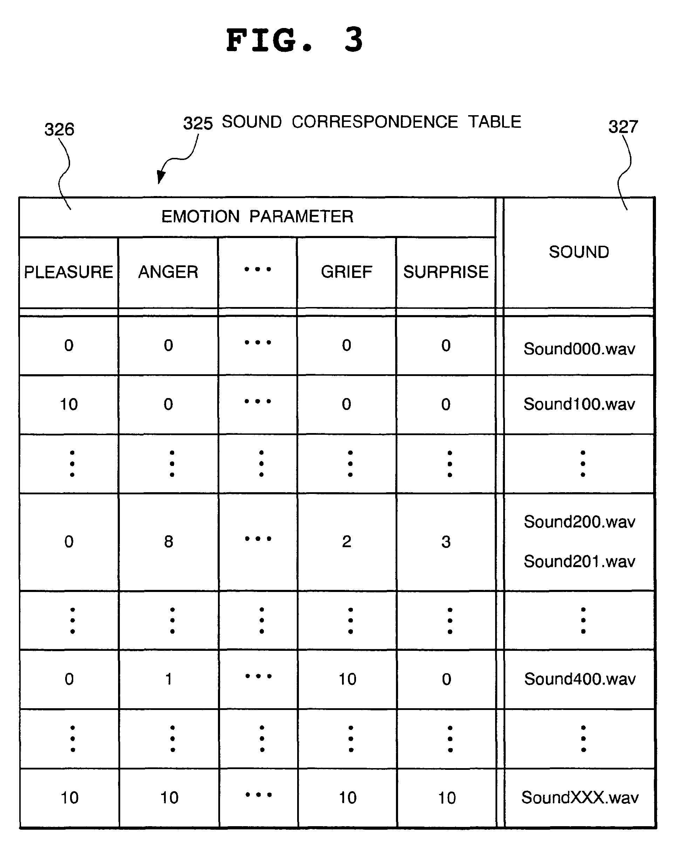

The sound selecting device 320 holds a sound correspondence table 325 as shown in Fig. 3. When the sound selecting device 320 receives an emotion parameter from the emotion creating device 200, the sound selecting device 320 refers to an emotion parameter column 326 of the sound correspondence table 325 and obtains the sound file name corresponding to the received emotion parameter at a sound column 327. The sound selecting device 320 retrieves the sound data corresponding to the obtained sound file name from the sound database 310 and supplies it to the expression information integrating device 800.

In the sound correspondence table 325 of Fig. 3, when two and more sound files correspond to one emotion parameter, the sound selecting device 320 selects one of them at random.

In the above way, the sound creating device 300 for supplying the sound data for expressing emotion corresponding to an emotion parameter can be realized.

Alternatively, the sound creating device 300 can be also realized by the second constitution shown by the block diagram of Fig. 4.

The second sound creating device 300 includes a reference sound database 350 for storing each constant sound that becomes a reference at the sound creation, a waveform processing device 360 for processing the waveform of a sound, and a waveform edit parameter creating device 370 for supplying a waveform edit parameter for the waveform processing device 360 depending on a received emotion parameter.

The second sound creating device 300 synthesizes a plurality of sounds for expressing various emotions through waveform edit, based on one reference sound. A listener perceives emotion, listening to a sound, much depending on a change with time in volume and interval of the sound. Accordingly, the second sound creating device 300 varies and edits the constant sound "wo..." which doesn't change in an interval and amplitude, by the sound interval, volume and quality, so to create a sound "whine" by expanding the sound interval and lowering the pitch and create a sound "wow, wow" by cutting down the interval and raising the pitch briskly.

The constant sounds that become reference for creating sounds are stored in the sound reference database 350. The constant data means the sound data which is free from a change with time in amplitude, pitch, and tone (frequency component).

The waveform processing device 360 is a device for editing the waveform of a sound, which processes the sound tone, pitch, amplitude of the waveform. The waveform edit software on the market can be used as the waveform processing device 360.

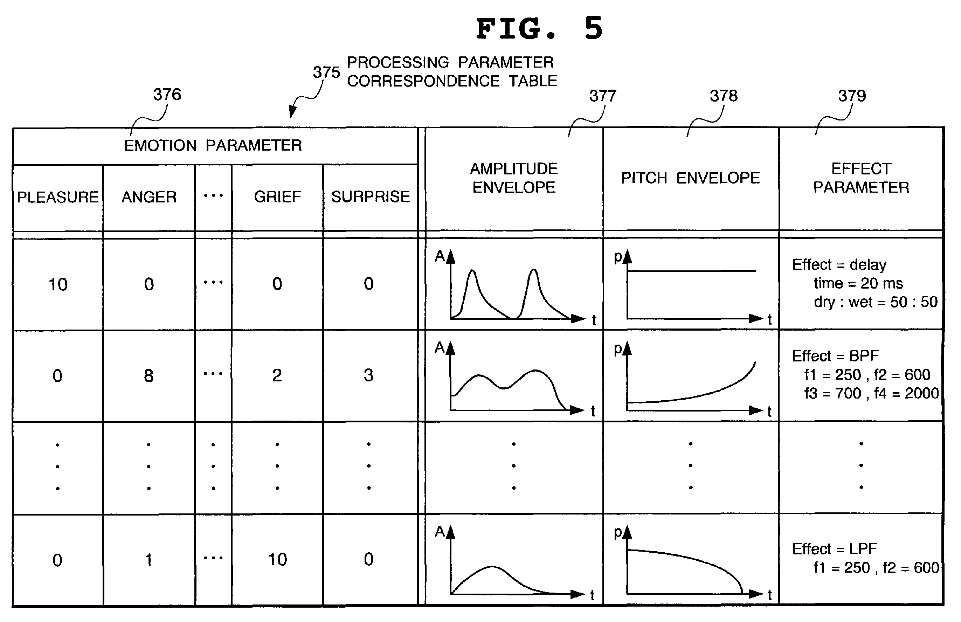

The waveform edit parameter creating device 370 receives an emotion parameter and supplies the amplitude envelope (change with time in the sound volume), the pitch envelope (change with time in the sound pitch), the effect parameter of the sound to the waveform processing device 360. As one of the concrete examples, the waveform edit parameter creating device 370 has a processing parameter correspondence table 375 as shown in Fig. 5, obtains the amplitude envelope, the pitch envelope, and the effect parameter corresponding to the received emotion parameter and supplies the same to the waveform processing device 360.

The waveform processing device 360 processes the waveform of the reference sound by using the received amplitude envelope, the pitch envelope and the effect parameter to output the sound data thereof.

In the processing parameter correspondence table 375 shown in Fig. 5, although it is only one waveform edit parameter (the amplitude envelope, the pitch envelope, and the effect parameter) that corresponds to each emotion parameter, each waveform edit parameter that corresponds to some emotion parameter is not restricted to one but various number of waveform edit parameters may be considered (for example, as for the emotion parameter, pleasure 10, three kinds of the amplitude envelopes, four kinds of the pitch envelopes, two kinds of the effect parameters, and the like are possible). In this case, the waveform edit parameter creating device 370 can select one of these several obtained waveform edit parameters at random.

Thus, the sound creating device 300 of the second constitution as shown in Fig. 4 can synthesize a plurality of sounds from one reference sound, and therefore, it is not necessary to create and store a plurality of sounds in advance. By replacing the reference sound, it is possible to create the sounds of various tones (voice tones) at ease.

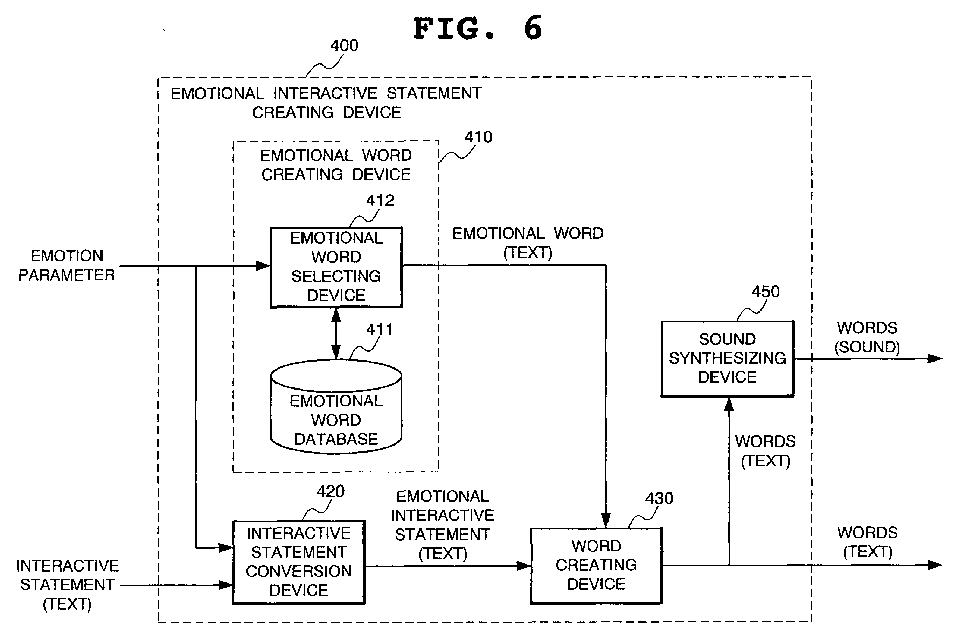

This time, the emotional interactive statement creating device 400 will be described. Fig. 6 is a block diagram showing a constitutional example of the emotional interactive statement creating device 400.

The emotional interactive statement creating device 400 includes an emotional word creating device 410 for creating an emotional word corresponding to an input emotion parameter, an interactive statement conversion device 420 for converting an input interactive statement into an emotional interactive statement full of emotion based on the emotion parameter, a words creating device 430 for creating words by combination of the emotional word and the emotional interactive statement, and a sound synthesizing device 450 for creating a synthesized sound from the words created by the words creating device 430.

The emotional word creating device 410 includes an emotional word database 411 for storing a plurality of emotional words for expressing emotions in advance as text data and an emotional word selecting device 412 for retrieving the emotional word corresponding to an input emotion parameter from the emotional word database 411.

The emotional word includes exclamations such as "heh-heh", "yahoo!" for expressing pleasure, "boo-boo" for expressing complaint, "sniff-sniff" for expressing grief and onomatopoeia/imitative word such as "thump-thump" and "ugh!". The emotional word is a word for expressing emotion of an uttering person, which should be such a word that a listener can guess the emotion of an artificial agent. The emotional interactive statement means various emotional interactive statements obtained by varying the plane interactive statement "Good morning" and "How about...?" without arousing any special feeling into a coquettish way of speaking "Good morning" with a flattering tone and a vivid way of speaking "Good morning!" in short, or varying the way of speaking into a friendly way of speaking "How...?" and a polite way of speaking "How would you like...?". The plane interactive statement without arousing any special feeling is treated as the emotional interactive statement assuming that it represents the "neutral emotion".

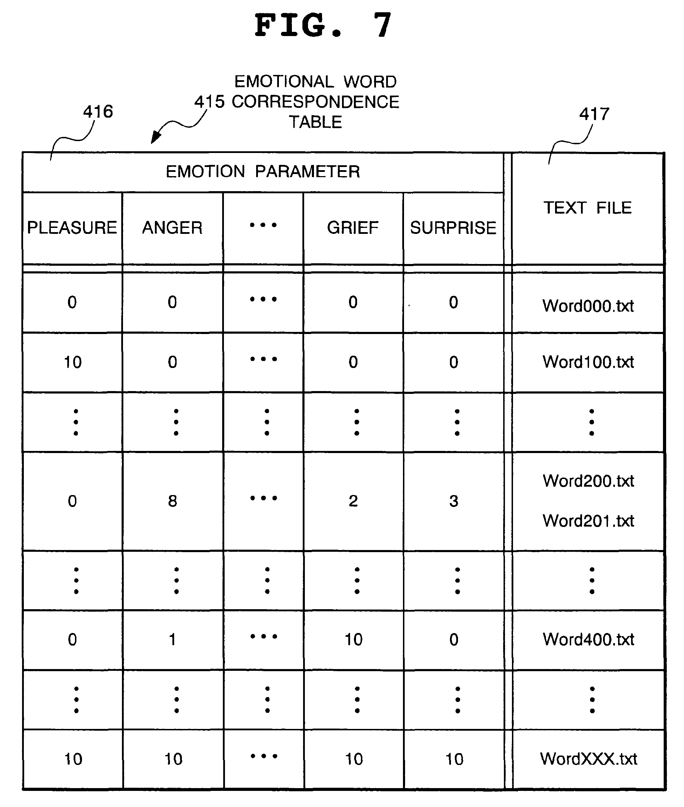

The concrete constitutional example of the emotional word creating device 410 will be described by using Fig. 6. The emotional word creating device 410 as mentioned above comprises the emotional words database 411 and the emotional words selecting device 412. The emotional words database 411 stores each emotional word as a text file. The emotional word selecting device 412 holds an emotional word correspondence table 415 as shown in Fig. 7. Upon receipt of an emotion parameter from the emotion creating device 200, the emotional word selecting device 412 obtains a text file name corresponding to the received emotion parameter from the text file column 417 by reference to the emotion parameter column 416 of the emotional word correspondence table 415. The emotion word selecting device 412 retrieves the text data corresponding to the obtained text file name from the emotional word database 411 and supplies it to the words creating device 430.

Each text data of emotional words directly fills the text file column 417 of the emotional word correspondence table 415, and the emotional word correspondence table 415 may be designed to be included in the emotional word database 411.

In the emotional word correspondence table 415, when two and more emotional words correspond to one emotion parameter, the emotional word selecting device 412 can select one of them at random. Alternatively, the emotional word selecting device 412 can be designed to select an output emotional word by the probability, for the received emotion parameter. This can be realized by making a plurality of the emotional words of the same content correspond to one kind of an emotion parameter in the emotional word correspondence table.

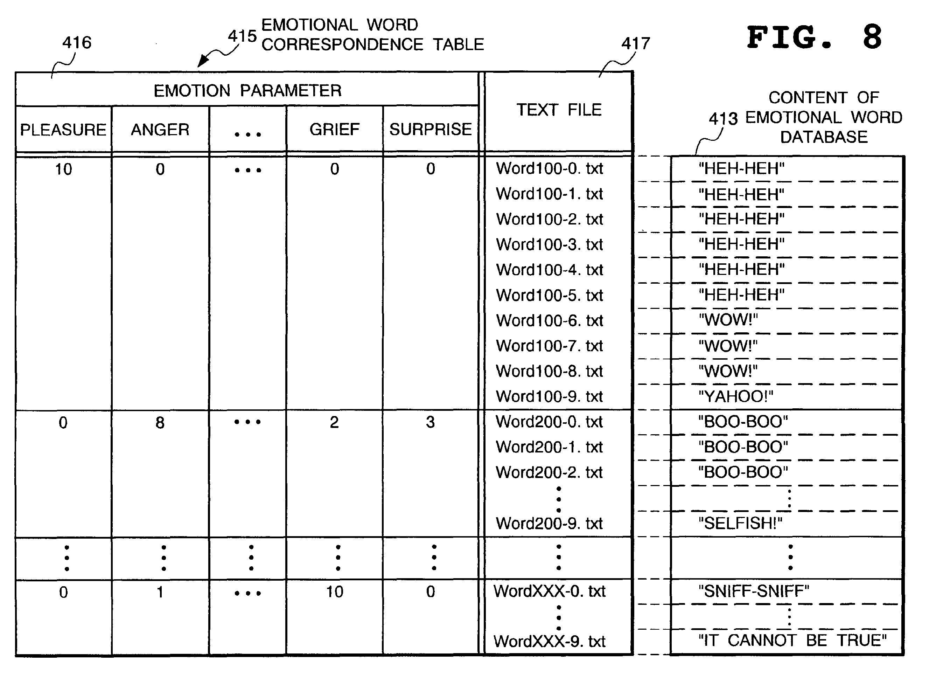

More concretely, this can be realized by using the emotional word correspondence table 415 shown in Fig. 8 instead of the emotional word correspondence table 415 shown in Fig. 7. In this emotional word correspondence table 415, ten text files correspond to one emotion parameter. For example, the files of Word100-0.txt to Word100-9.txt correspond to the parameter of the top line. The emotional text data of this parameter stored in the emotional database 411 consists of six files from the Word100-0.txt to the Word100-5.txt about "heh-heh" and three files from the Word100-6.txt to the Word100-8.txt about "wow!" and the last Word100-9.txt file about "yahoo!". The extension txt shows that the file is of the text format.

When the emotional word selecting device 412 selects one of the ten text files of the emotional word correspondence table 415, for the emotion parameter received from the emotion creating device 200, "heh-heh", "wow!" and "yahoo!" are to be supplied at the probability of 6:3:1.

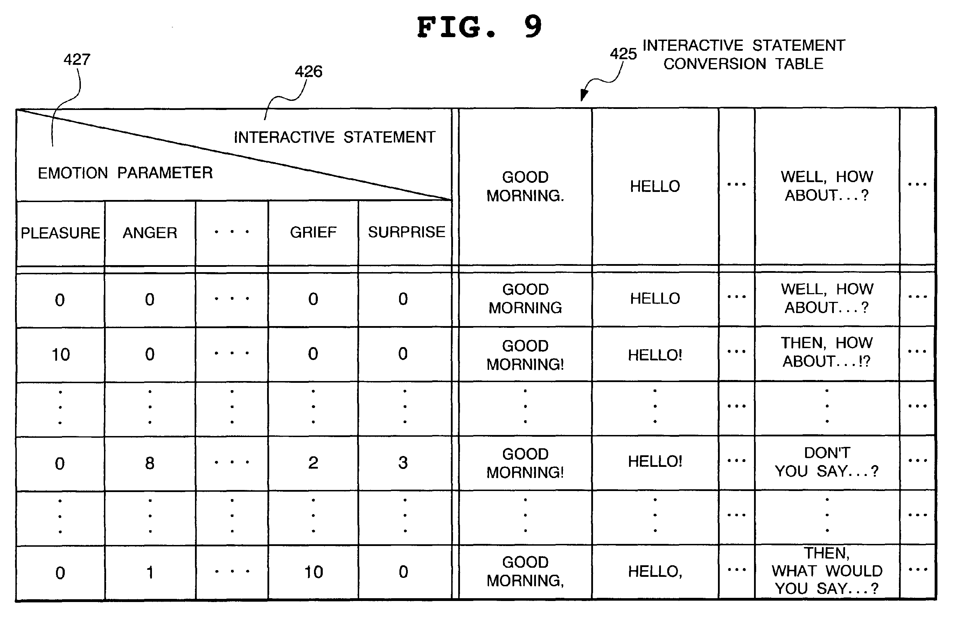

The interactive statement conversion device 420 will be described. The interactive statement conversion device 420 holds an interactive statement conversion table 425 as shown in Fig. 9. Upon receipt of an interactive statement from the interactive device 100 and an emotion parameter from the emotion creating device 200, the interactive statement conversion device 420 retrieves a row corresponding to the interactive statement received from the interactive statement column 426 and a line corresponding to the emotion parameter received from the emotion parameter column 427, from the interactive statement conversion table 425, obtains the emotional interactive statement corresponding to the received interactive statement and emotion parameter as the text data at the intersection of the row and the line, and supplies it to the words creating device 430.

In the interactive statement conversion table 425 shown in Fig. 9, although only one emotional interactive statement corresponds to an interactive statement and an emotion parameter, this converted emotional interactive statement is not restricted to one but two and more emotional interactive statements are possible. In this case, the interactive statement conversion device 420 selects one of the several obtained emotional interactive statements at random.

The words creating device 430 receives an emotional word and an emotional interactive statement as the text data and supplies this combination as the words (text data) to the sound synthesizing device 450 and the expression information integrating device 800.

The words creating device 430 is to ordinarily put an emotional word and an emotional interactive statement in this order as the text data. Besides, the emotional word may be inserted into any position of the emotional interactive statement as far as the meaning of the statement is not changed. For example, as for the emotional word "heh-heh" and the emotional interactive statement "Then, how about∼!? ", it is permitted to create the words such as "heh-heh, then, how about∼!?", "then, heh-heh, how about∼!?" and "then, how about∼!? Heh-heh".

Upon receipt of the words created by the words creating device 430, the sound synthesizing device 450 converts the words into sound data and supplies the same to the expression information integrating device 800. The sound synthesizing software generally on the market can be used as the sound synthesizing device.

In Fig. 6, although the sound synthesizing device 450 receives only the text data for sound synthesis, it may be designed to receive also an emotion parameter together with the text data and synthesize an emotional sound.

Further, with the sound data for record sound stored in the emotional word database 411 and the interactive statement conversion device 420 in addition to the text data, the words creating device 430 may edit the text data and combine the sound data with the text data, so to supply the text data and the sound data to the expression information integrating device 800.

In the above method, the emotional interactive statement creating device 400 for supplying the text data and the sound data of the words expressing some emotion, correspondingly to an emotion parameter, can be realized.

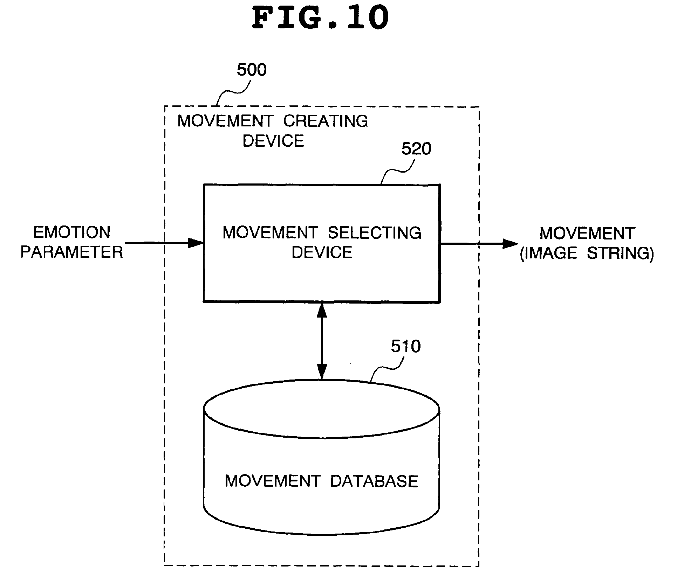

This time, the movement creating device 500 will be described. Fig. 10 is a block diagram showing a constitutional example of the movement creating device 500.

The movement creating device 500 includes a movement database 510 for previously storing a plurality of movements expressing emotions as a movement image string and a movement selecting device 520 for retrieving a movement pattern corresponding to an input emotion parameter from the movement database 510.

The movements here mean movements from which a viewer can guess the emotion of an artificial agent such as raising both hands at a happy time and hanging one's head with both hands dangle at an unhappy time. Any movements will do as far as a viewer can guess the emotion of an artificial agent. The movements are not restricted to realistic movements, but exaggerated movements such as breaking a body into pieces may be possible.

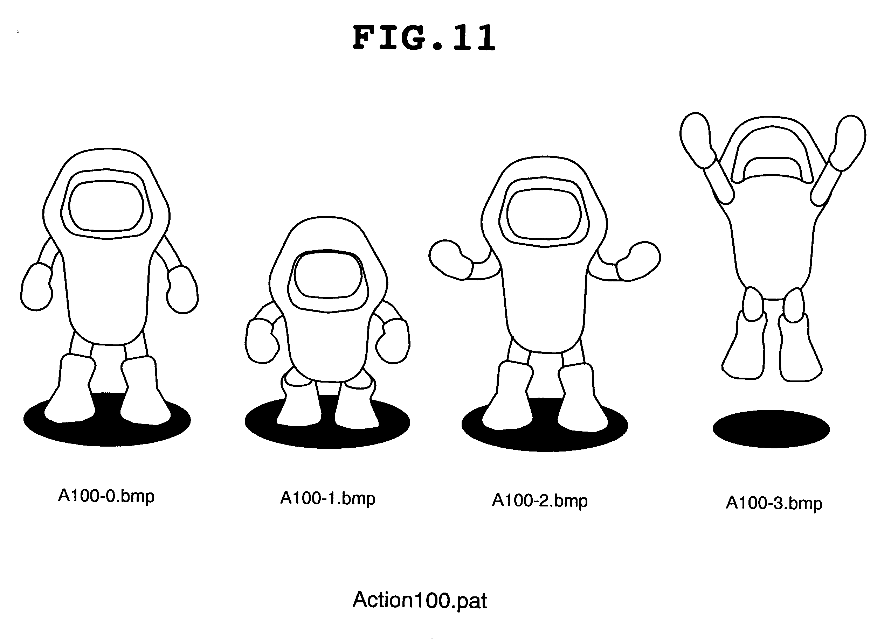

The movement image string means a series of two-dimensional or three-dimensional images obtained and stored by making discrete the movements changing with time in every time unit. When using the two-dimensional image, the movement image string is formed by, for example, A100-0.bmp, A100-1.bmp, A100-2.bmp, and A100-3.bmp as illustrated in Fig. 11. The extension bmp shows that the file is of the two-dimensional image format.

The movement pattern is a pattern with some kind of movements recorded there and it is a name attached to a set of image files forming the movement image string. More concretely, in Fig. 11, for example, the movement pattern name, Action100.pat is given to the set of four images including A100-0.bmp to A100-3.bmp.

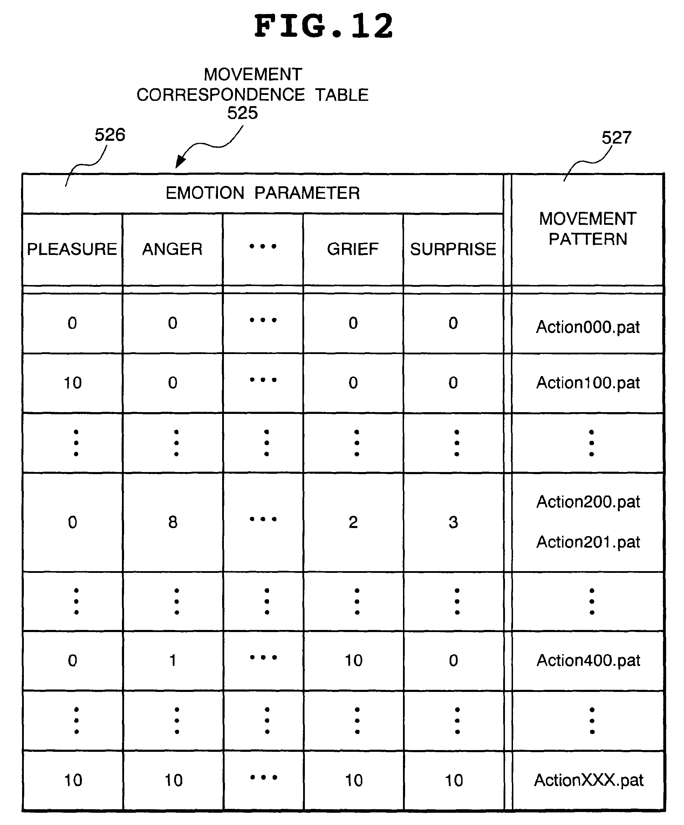

The movement selecting device 520 holds a movement correspondence table 525 as illustrated in Fig. 12. Upon receipt of an emotion parameter from the emotion creating device 200, the movement selecting device 520 obtains the movement pattern name corresponding to a received emotion parameter from the movement pattern column 527 by reference to the emotion parameter column 526 of the movement correspondence table 525.

The movement selecting device 520 retrieves the movement image string corresponding to the obtained movement pattern name from the movement database 510 and supplies the obtained movement image string to the expression information integrating device 800. For example, the movement selecting device 520 retrieves the movement image string corresponding to the movement pattern name from the movement database 510 as follows. A movement pattern name-file name correspondence table (not illustrated) in which the file names of a plurality of image files forming a movement image string of each movement pattern name are stored, correspondingly to each movement pattern name, in the order of display, is stored in the movement database 510, in addition to the image file as shown in Fig. 11. Upon receipt of the movement pattern name, the movement selecting device 520 obtains several file names stored correspondingly to the movement pattern name at first, by reference to the movement pattern name-file name correspondence table. Thereafter, the movement selecting device 520 takes out the images in the order of display from the above image files corresponding to the obtained file names and supplies them to the expression information integrating device 800.

In the movement correspondence table 525 of Fig. 12, when two and more movement patterns correspond to one combination of emotion parameter, the movement selecting device 520 can select one of the movement patterns at random.

In the above method, the movement creating device 500 for supplying an image string of movements expressing some emotion, correspondingly to an emotion parameter, can be realized.

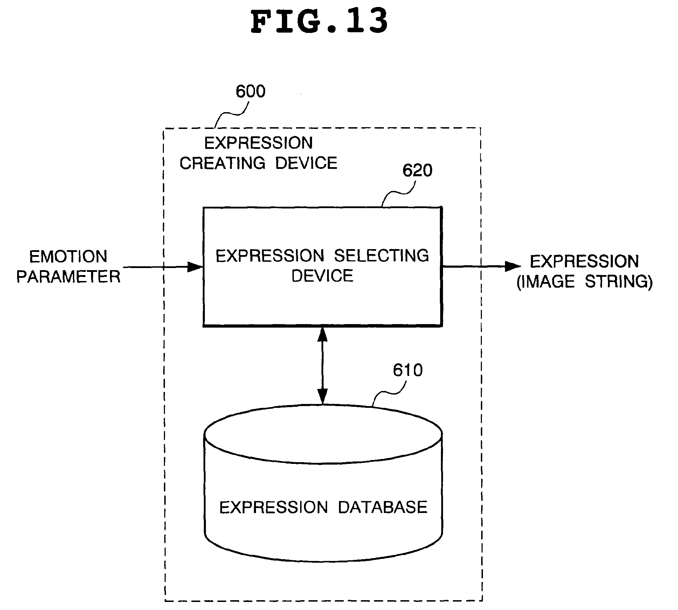

The expression creating device 600 will be described. Fig. 13 is a block diagram showing a constitutional example of the expression creating device 600.

The expression creating device 600 includes an expression database 610 for previously storing a plurality of expressions for representing emotions as an expression image string and an expression selecting device 620 for retrieving an expression pattern corresponding to an input emotion parameter from the expression database 610.

The expression here means an expression for representing emotion of an artificial agent, for example, such as smiling at a happy time and tearing at an unhappy time. Any expression will do as far as a viewer can guess the emotion of an artificial agent from the expression. The expression is not restricted to a realistic expression, but an exaggerated expression such as making eyes points is possible.

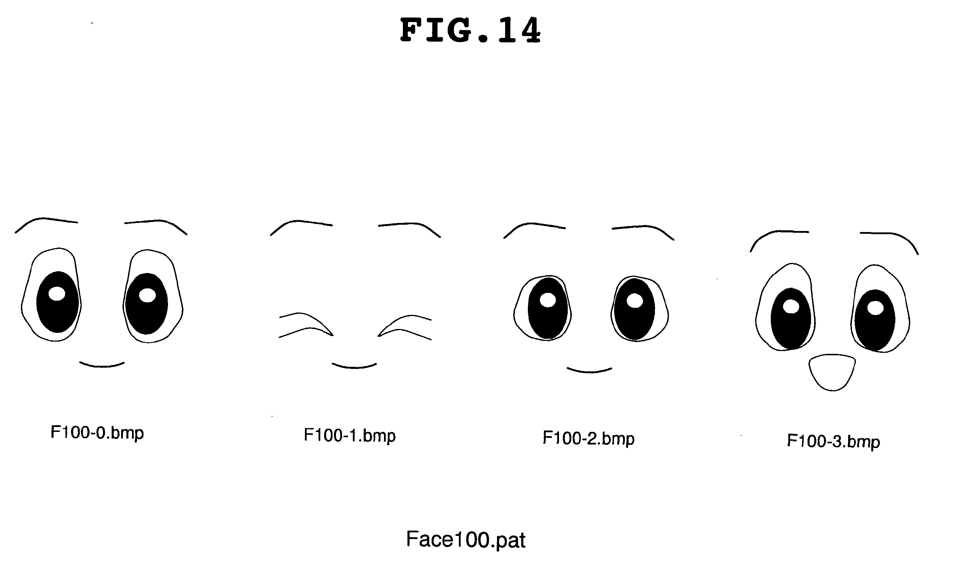

The expression image string means a series of two-dimensional or three-dimensional images stored and obtained by making discrete the expressions changing with time in every time unit. When using the two-dimensional image, the expression image string is formed by, for example, F100-0.bmp, F100-1.bmp, F100-2.bmp, and F100-3.bmp as illustrated in Fig. 14.

The expression pattern is a pattern with some change in expression recorded there and it is a name attached to a set of image files forming an expression image string. More concretely, in Fig. 14, for example, the expression pattern name, Face100.pat is given to the set of four images including F100-0.bmp to F100-3.bmp.

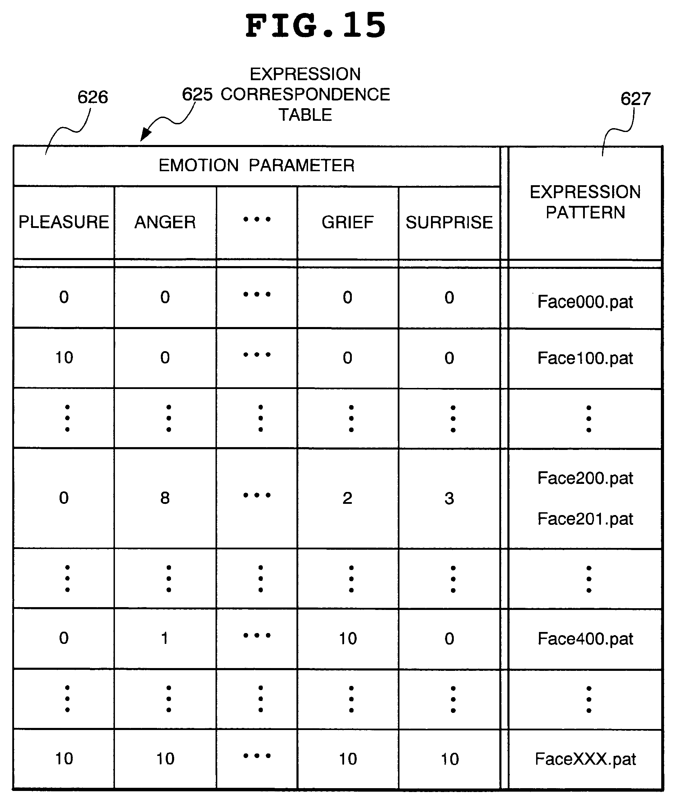

The expression selecting device 620 holds an expression correspondence table 625 as illustrated in Fig. 15. Upon receipt of an emotion parameter from the emotion creating device 200, the expression selecting device 620 obtains the expression pattern name corresponding to the received emotion parameter from the expression pattern column 627 by reference to the emotion parameter column 626 of the expression correspondence table 625.

The expression selecting device 620 retrieves the expression image string corresponding to the obtained expression pattern name from the expression database 610 and supplies the obtained expression image string to the expression information integrating device 800. The expression selecting device 620 retrieves the expression image string corresponding to the expression pattern name from the expression database 610, for example, as follows. An expression pattern name-file name correspondence table (not illustrated) in which the file names of a plurality of image files forming an expression image string of the expression pattern name are stored, correspondingly to each expression pattern name, in the order of display, is stored in the expression database 610, in addition to the image file as shown in Fig. 14. Upon receipt of the expression pattern name, the expression selecting device 620 obtains several file names stored correspondingly to the expression pattern name at first, by reference to the expression pattern name-file name correspondence table. Thereafter, the expression selecting device 620 takes out the images in the order of display from the above image files corresponding to the obtained file names and supplies them to the expression information integrating device 800.

In the expression correspondence table 625 of Fig. 15, when two and more expression patterns correspond to one combination of emotion parameter, the expression selecting device 620 can select one of the expression patterns at random.

In the above method, the expression creating device 600 for supplying an image string of expressions representing some emotion, correspondingly to an emotion parameter, can be realized.

At last, the expression information integrating device 800 of Fig. 1 will be described.

The expression information integrating device 800 receives a sound that is output from the sound creating device 300, the text data and sound data of the words that are output from the emotional interactive statement creating device 400, a movement image string that is output from the movement creating device 500, and an expression image string that is output from the expression creating device 600, and arranges the layout and output synchronization of the data so as to be supplied through the sound output device 910 and the displaying device 920.

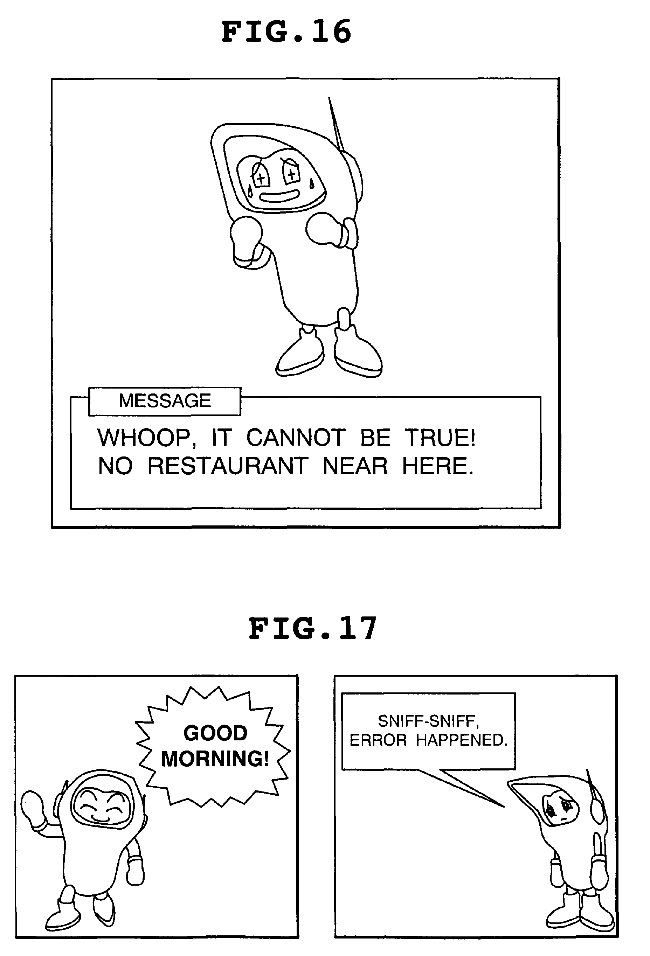

The words may be displayed as text data in a text display region as shown in Fig. 16, and the words may be displayed by use of a decorative character and a balloon as shown in Fig. 17. The expression information integrating device 800 further creates the figure of an artificial agent according to the position and size of the movements and expressions and decides the allocation of the same agent as well as the character information.

The technique of the synchronization processing for adjusting the timing of playback of multimedia data such as image data and sound data is generally known as "Multimedia Reproducing Device", and for example, "Multimedia Information Reproducing Device" is disclosed in Japanese Patent Publication No. 11-27615. Most of the multimedia reproducing devices have a multimedia scenario describing start and end time, playback time, display position, and display font of each multimedia data and play back each multimedia data according to this multimedia scenario. This multimedia reproducing device may be used as the expression information integrating device 800.

At this time, the media available for expression of emotion can be restricted, by describing unavailable media, in the multimedia scenario. For example, under the circumstances where visual display is not available, the emotion of an artificial agent can be expressed only by use of the sound data and the words data.

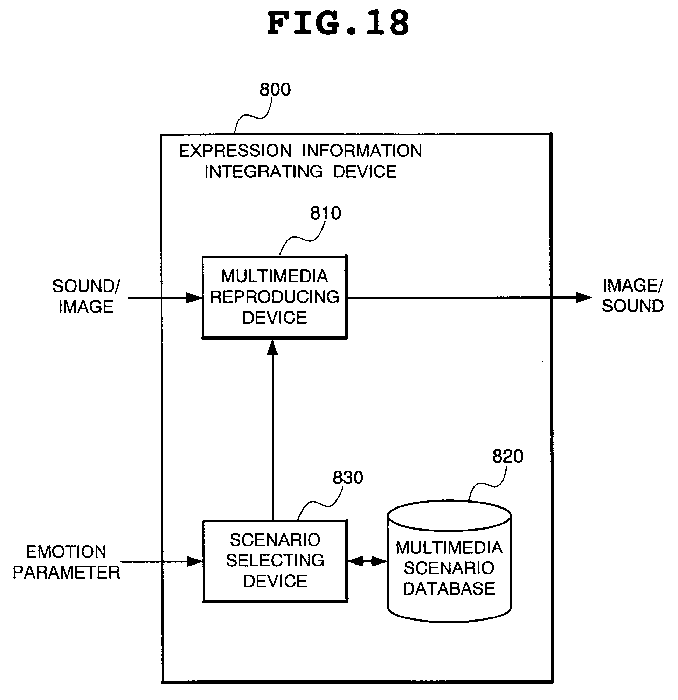

Further, it is possible to change a multimedia scenario to be executed, depending on the emotion of an artificial agent, by using the expression information integrating device 800 constituted as shown in Fig. 18.

The expression information integrating device 800 in this case comprises a multimedia reproducing device 810 for playing back each multimedia data according to the multimedia scenario describing start and end time, playback time, display position, and display font of each multimedia data, a multimedia scenario database 820 for storing a plurality of multimedia scenarios, and a scenario selecting device 830 for obtaining a multimedia scenario corresponding to an input emotion parameter from the multimedia scenario database 820 and supplying the same to the multimedia reproducing device 810.

The scenario selecting device 830 previously holds a correspondence table of an emotion parameter and a multimedia scenario name and obtains the multimedia scenario corresponding to an input emotion parameter from the multimedia scenario database 820 by reference to this table.

The scenario selecting device 830 supplies the obtained multimedia scenario to the multimedia reproducing device 810 and the multimedia reproducing device 810 executes the multimedia playback according to the supplied multimedia scenario. Thus, the output timing and the layout of the expression information can be changed depending on the emotion of an artificial agent.

Although only one example of the movement creating device 500 and the expression creating device 600 have been described respectively, the type of an image to be treated (two-dimensional image, three-dimensional image), the method of forming movements and expressions, and the storing method are not restricted to this example. As for these devices, any type will do as far as the data for displaying the movements and expressions representing the emotion can be supplied.

For example, as disclosed in Japanese Patent Publication No. Heisei 10-222697, "Virtual Pseudo Person Image Generating System", there is a method of expressing the movements of an artificial person agent by concrete numerical data with respect to the three-dimensional position of each joint of the body, moving direction, moving angle and the like. Similarly, the expressions of an artificial agent can be expressed by the numerical data with respect to the three-dimensional position, moving direction, and moving angle of the parts forming a face such as an eyelid, an eyeball, and a lip.

Using this technique, the movement creating device 500 and the expression creating device 600 previously store a set of numerical data expressing movements and expressions with time as a movement pattern and an expression pattern, and they can supply the movement pattern and the expression pattern corresponding to a received emotion parameter. In this case, internally provided with a three-dimensional form model of an artificial agent created by the computer graphics, the expression information integrating device 800 can deform the form of the three-dimensional model according to the numerical data of the received movement pattern and the expression pattern and create an image which the displaying device 920 can show.

Alternatively, the expression information integrating device 800 can output the numerical data itself of the received movement pattern and expression pattern according to the multimedia scenario so to operate some substantial character such as a stuffed animal or dummy. This can be realized by representing sound, voice, expression, and movements using a substantial character (a stuffed animal or a dummy) including a speaker and a motor as the sound output device 910 and the displaying device 920 in the constitutional view of the embodiment in Fig. 1. At this time, the expressions and the movements can be controlled by using the numerical data such as the three-dimensional position, movement direction, movement angle and the like as for the joints of a body and the parts of a face as mentioned above.

The form of an artificial agent can be represented by a combination of two-dimensional expression and three-dimensional movements, the expressions being represented by using a two-dimensional image, the movements being represented by deforming a three-dimensional form model based on the numerical data. On the contrary, the expressions can be represented by using a three-dimensional form model, the movements can be represented by using a two-dimensional image, and the combination thereof can also represent the form of an artificial agent.

The concrete example of the movements will be described by using Figs. 1 to 19.

The concrete operation and input/output of each device will be described by taking for example the situations where in the interaction with a user, the emotion creating device 200 supplies the emotion parameter (10 as for pleasure only) with the intensity of the elemental emotion "pleasure", 10 and the intensity of the other emotions, all 0, and the interactive device 100 supplies the text data "Well, how do you like jazz?".

At first, the sound selecting device 320 in Fig. 2, upon receipt of an emotion parameter that is output from the emotion creating device 200, obtains the file name, Sound100.wav from the sound column 327 by reference to the emotion parameter column 326 of the sound correspondence table 325 as shown in Fig. 3 (here the extension wav shows that the file is the sound data).

This time, the sound selecting device 320 retrieves the sound data corresponding to the obtained file name, Sound100.wav from the sound database 310 and supplies the same data to the expression information integrating device 800. Assume that the Sound100.wav is the sound "pip-peep-peep!" represented by the imitation sound.

The operation of the emotional interactive statement creating device 400 shown in Fig. 6 will be described.

At first, the emotional word creating device 410 for supplying the emotional word upon receipt of only an emotion parameter will be described. The emotion parameter that is the output from the emotion creating device 200, received by the emotional word creating device 410, is passed to the emotional word selecting device 412. The emotional word selecting device 412 obtains the text file name, Word100.txt from the text file column 417 by reference to the emotion parameter column 416 of the emotional word correspondence table 415 shown in Fig. 7. The emotional word selecting device 412 retrieves the text data corresponding to the obtained file name, Word100.txt from the emotional word database 411 and supplies the same data to the words creating device 430. Assume that the emotional word stored in the text file, Word100.txt is, for example, "heh-heh!".

This time, the interactive statement conversion device 420 for supplying an emotional interactive statement after receiving the emotion parameter and an interactive statement that is output from the interactive device 100. Upon receipt of the interactive statement, "Well, how do you like jazz?" from the interactive device 100 and the emotion parameter from the emotion creating device 200, the interactive statement conversion device 420 retrieves a line corresponding to the received interactive statement from the interactive statement column 426 and a row corresponding to the received emotion parameter from the emotion parameter column 427, obtains the emotional interactive statement, "Then, how do you like jazz!?" corresponding to the received interactive statement and emotion parameter, as the text data, at the intersection of the line and the row, and supplies the same to the words creating device 430.

Receiving the emotional word "heh-heh!" and the emotional interactive statement, "Then, how do you like jazz!?", the words creating device 430 combines them in this order, creates the words "Heh-heh! Then, how do you like jazz!?" (text data) and supplies the same words to the sound synthesizing device 450 and the expression information integrating device 800.

The sound synthesizing device 450 receives the words, "Heh-heh! Then, how do you like jazz!?", synthesizes these sounds and supplies the words, "Heh-heh! Then, how do you like jazz!?" (sound data) to the expression information integrating device 800.

Upon receipt of an emotion parameter from the emotion creating device 200, the movement selecting device 520 of Fig. 10 obtains the movement pattern name, Action100.pat corresponding to the received emotion parameter from the movement pattern column 527, by reference to the emotion parameter column 526 of the movement correspondence table 525 of Fig. 12. Then, the movement selecting device 520 retrieves the movement image string corresponding to the obtained movement pattern name, Action100.pat from the movement database 510 and supplies the obtained movement image string to the expression information integrating device 800.

Upon receipt of the emotion parameter from the emotion creating device 200, the expression selecting device 620 of Fig. 13 obtains the expression pattern name, Face100.pat corresponding to the received emotion parameter at the expression pattern column 627 by reference to the emotion parameter column 626 of the expression correspondence table 625 of Fig. 15. Then, the expression selecting device 620 retrieves the expression image string corresponding to the obtained expression pattern name, Face100.pat from the expression database 610 and supplies the obtained expression image string to the expression information integrating device 800.

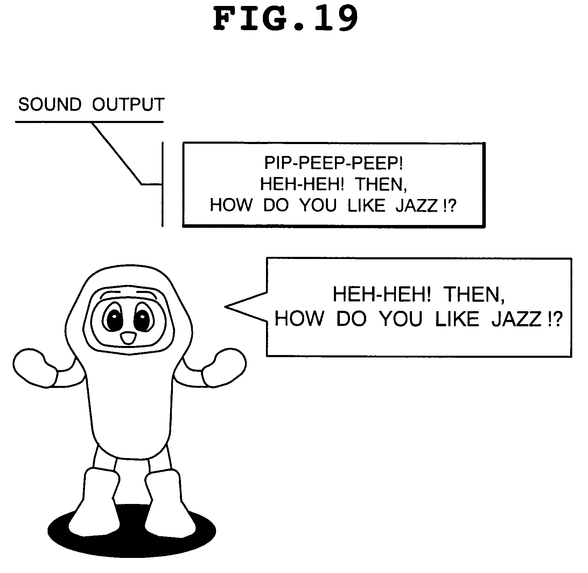

The expression information integrating device 800 receives the sound ("pip-peep-peep!") that is output from the sound creating device 300, the text data and the sound data of the words ("Heh-heh! Then, how do you like jazz!?") that are output from the emotional interactive statement creating device 400, the movement image string (Action100.pat) that is output from the movement creating device 500, and the expression image string (Face100.pat) that is output from the expression creating device 600, and arranges the layout and output synchronization of the data so as to supply the data in combination of a balloon and the sound, for example, as shown in Fig. 19.

As for the sound, for example, it is possible to supply the sound at first and then supply the synthesized sound. As for the timing of the utterance, it is possible to move an agent's mouth according to the words while the sound is being supplied when the movements and the sound synchronously start.

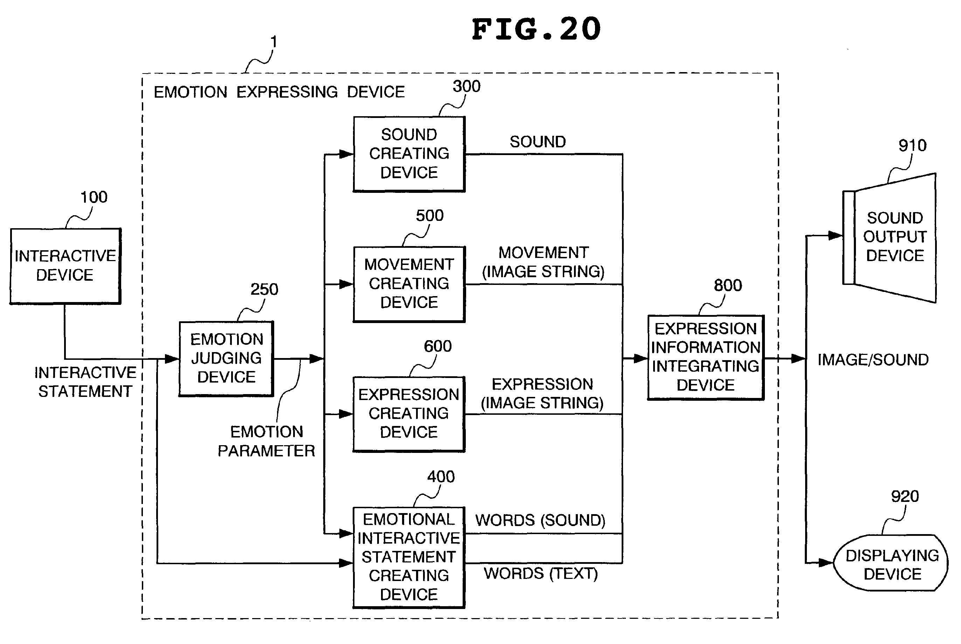

The second embodiment of the present invention will be described in detail with reference to the drawings. As another embodiment of the present invention, the emotion expressing device 1 provided with an emotion judging device 250 instead of the emotion creating device 200 is shown in Fig. 20 although the basic constitution is as shown in Fig. 1.

In Fig. 20, the emotion expressing device 1 comprises an emotion judging device 250 for judging emotion from an interactive statement, a sound creating device 300 for creating sound for representing emotion, an emotional interactive statement creating device 400 for creating the words for representing emotion, a movement creating device 500 for creating movements for representing emotion, an expression creating device 600 for creating emotion for representing emotion, and an expression information integrating device 800 for performing the layout processing and the output synchronization processing in supplying the created sound, words, movements and expression.

The sound creating device 300, the emotional interactive statement creating device 400, the movement creating device 500, the expression creating device 600 and the expression information integrating device 800 have the same structure as those described in the first embodiment, and therefore, the operation and the function will not be described again.

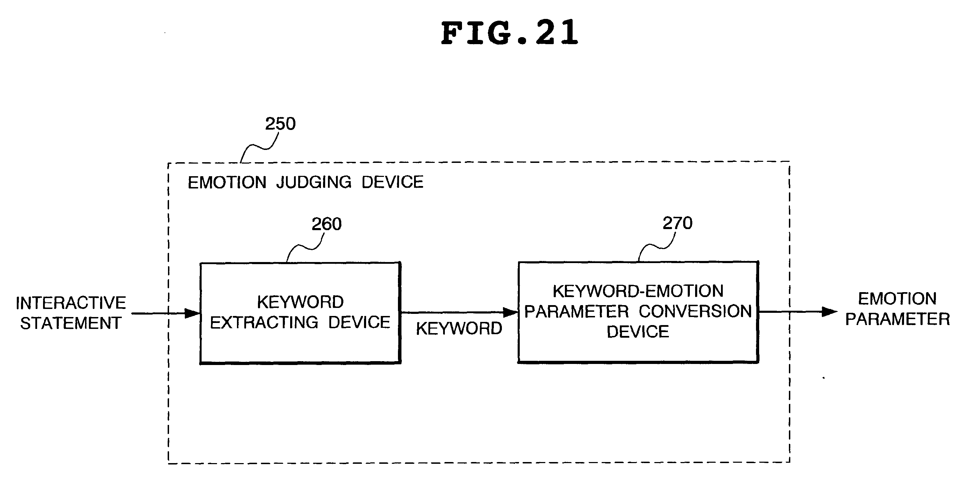

The emotion judging device 250 receives an interactive statement supplied from the interactive device 100, judges the emotion included in the interactive statement and supplies the emotion parameter. The emotion judging device 250 can be concretely realized by the structure shown in Fig. 21.

The emotion judging device 250 includes a keyword extracting device 260 for extracting keywords from a received interactive statement and a keyword-emotion parameter conversion device 270 for supplying the emotion parameter corresponding to the keyword extracted by the keyword extracting device.

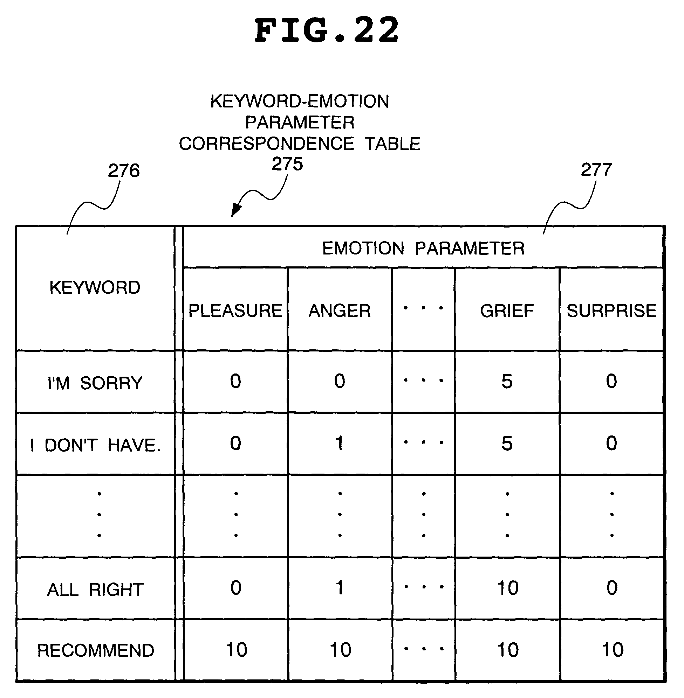

The keyword-emotion parameter conversion device 270 is provided with a keyword-emotion parameter correspondence table 275 as shown in Fig. 22. A keyword and an emotion parameter corresponding to the keyword are previously stored in the keyword-emotion parameter correspondence table 275. The keyword extracting device 260 checks whether there is a keyword stored in the keyword column 276 of the keyword-emotion parameter correspondence table 275, within an input interactive statement; when there is, it supplies the keyword to the keyword-emotion parameter conversion device 270, and when there is not, it supplies a message to this effect to the keyword-emotion parameter conversion device 270.

When receiving a keyword, the keyword-emotion parameter conversion device 270 obtains the emotion parameter corresponding to the received keyword at the emotion parameter column 277 and outputs the same.

When there are a plurality of keywords within one interactive statement, the keyword extracting device 260 supplies all the keywords to the keyword-emotion parameter conversion device 270. The keyword-emotion parameter conversion device 270 adds the obtained emotion parameters to output the same.

For example, the description will be made in the case where the interactive statement, "I'm sorry. There is no music you want." is supplied to the emotion judging device 250. The keyword extracting device 260 extracts the keywords, "I'm sorry" and "there is no" from the interactive statement and supplies them to the keyword-emotion parameter conversion device 270. The keyword-emotion parameter conversion device 270 obtains the emotion parameter, "grief=5 and the others are 0" as for "I'm sorry" and the emotion parameter, "anger=1, grief=5 and the others are 0" as for "there is no", by reference to the keyword-emotion parameter correspondence table 275. The keyword-emotion parameter conversion device 270 adds the obtained two emotion parameters to get the emotion parameter, "anger=1, grief=10 and the others are 0" and outputs the same parameter.

The keyword-emotion parameter conversion device 270 outputs the emotion parameter of all the elements 0 when receiving from the keyword extracting device 260 to the effect that there is no keyword.

As mentioned above, since the emotion expressing device 1 is formed by using the emotion judging device 250, it is possible to realize an interactive device for supplying interactive output while representing the emotion of an artificial agent only by connecting the emotion expressing device 1 to the output portion as for the conventional interactive device taking emotion into no consideration.

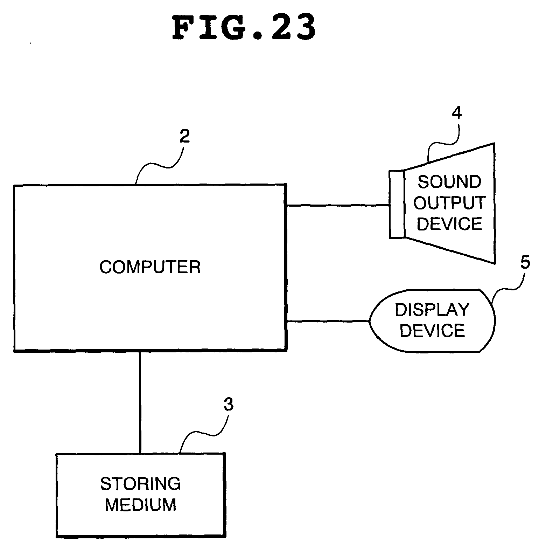

Fig. 23 is a block diagram showing an example of the hardware structure of the first embodiment shown in Fig. 1 and the second embodiment shown in Fig. 20, which comprises a computer 2, a storing medium 3, a sound output device 4, and a display 5. The storing medium 3 is a disk, a semiconductor memory, and the other storing medium, where an emotion expressing program for working the computer 2 as the emotion expressing device is stored.

When realizing the emotion expressing device relative to the first embodiment shown in Fig. 1, the program stored in the storing medium 3 is read out by the computer 2, to control the operation of the computer 2, thereby realizing the emotion creating device 200, the sound creating device 300, the emotional interactive statement creating device 400, the movement creating device 500, the expression creating device 600, and the expression information integrating device 800 on the computer 2.

When realizing the emotion expressing device relative to the second embodiment shown in Fig. 20, the program stored in the storing medium 3 is read out by the computer 2, to control the operation of the computer 2, thereby realizing the emotion judging device 250, the sound creating device 300, the emotional interactive statement creating device 400, the movement creating device 500, the expression creating device 600, and the expression information integrating device 800.

As set forth hereinabove, it is effective in that a user can read out the emotion of an artificial agent at ease, by providing with the sound creating device, the emotional interactive statement creating device, the movement creating device, and the expression creating device, for multiplying emotion expression means.

Even when a user cannot accept only the sound output or only the image output due to some circumstances, it is possible to read out the emotion of an artificial agent from only the sound or only the image.

When supplying a sound before the words in the sound output, it is effective in that a user can guess whether the utterance of an artificial agent following the next is of the good content or the bad content before listening to the utterance of the artificial agent.

## Claims

1. An emotion expressing device comprising:
an emotion creating device (200) for deciding and supplying an emotion parameter of an artificial agent;
an expression information integrating device (800) for performing layout processing and output synchronization processing in sound and image output according to a multimedia scenario; and further comprising at least one of
a sound creating device (300) for creating a sound for representing emotion based on the emotion parameter supplied from said emotion creating device (200), an emotional interactive statement creating device (400) for creating words for representing emotion based on the emotion parameter, and a movement creating device (500) for creating movements for representing emotion based on the emotion parameter.

2. An emotion expressing device as set forth in Claim 1, further comprising
an expression creating device (600) for creating an expression for representing emotion based on the emotion parameter supplied from said emotion creating device (200).

3. An emotion expressing device as set forth in Claim 1 or 2, in which
said sound creating device (300) includes
a sound database (310) for previously storing a plurality of sounds for representing emotions as sound data, and
a sound selecting device (320) for retrieving a sound corresponding to an input emotion parameter from said sound database (310).

4. An emotion expressing device as set forth in Claim 1, 2 or 3, further comprising
an expression creating device (600) for creating an expression for representing emotion based on the emotion parameter supplied from said emotion creating device (200), in which
said sound creating device (300) includes
a sound database (310) for previously storing a plurality of sounds for representing emotions as sound data, and
a sound selecting device (320) for retrieving a sound corresponding to an input emotion parameter from said sound database (310).

5. An emotion expressing device as set forth in Claim 1, 2, 3 or 4, in which
said sound creating device (300) includes
a reference sound database (350) for storing a reference sound to be subjected to waveform processing,
a waveform edit parameter creating device (370) for supplying a waveform edit parameter depending on an input emotion parameter, and
a waveform processing device (360) for performing amplitude envelope processing, pitch envelope processing, and effect processing of a reference sound stored in said sound reference database (350), according to the waveform edit parameter supplied from said waveform edit parameter creating device (370).

6. A device as set forth in any one of Claims 1 to 5, further comprising
an expression creating device (600) for creating an expression for representing emotion based on the emotion parameter supplied from said emotion creating device (200), in which
said sound creating device (300) includes
a reference sound database (350) for storing a reference sound to be subjected to waveform processing,
a waveform edit parameter creating device (370) for supplying a waveform edit parameter depending on an input emotion parameter, and
a waveform processing device (360) for performing amplitude envelope processing, pitch envelope processing, and effect processing of a reference sound stored in said sound reference database (350), according to the waveform edit parameter supplied from said waveform edit parameter creating device (370).

7. A device as set forth in any one of Claims 1 to 6, in which
said emotional interactive statement creating device (400) includes at least one of
an emotional word creating device (410) for creating an emotional word corresponding to an input emotion parameter and an interactive statement conversion device (420) for converting an input interactive statement into an emotional interactive statement based on the emotion parameter.

8. A device as set forth in any one of Claims 1 to 7, further comprising
an expression creating device (600) for creating an expression for representing emotion based on the emotion parameter supplied from said emotion creating device (200), in which
said emotional interactive statement creating device (400) includes at least one of
an emotional word creating device (410) for creating an emotional word corresponding to an input emotion parameter and an interactive statement conversion device (420) for converting an input interactive statement into an emotional interactive statement based on the emotion parameter.

9. A device as set forth in any one of Claims 1 to 8, in which
said emotional interactive statement creating device (400) includes
an emotional word creating device (410) for creating an emotional word corresponding to an input emotion parameter,
an interactive statement conversion device (420) for converting an input interactive statement into an emotional interactive statement based on the emotion parameter, and
a words creating device (430) for creating words in combination of an emotional word supplied from said emotional word creating device (410) and an emotional interactive statement supplied from said interactive statement conversion device (420).

10. A device as set forth in any one of Claims 1 to 9, further comprising
an expression creating device (600) for creating an expression for representing emotion based on the emotion parameter supplied from said emotion creating device (200), in which
said emotional interactive statement creating device (400) includes
an emotional word creating device (410) for creating an emotional word corresponding to an input emotion parameter,
an interactive statement conversion device (420) for converting an input interactive statement into an emotional interactive statement based on an emotion parameter, and
a words creating device (430) for creating words in combination of an emotional word supplied from said emotional word creating device and an emotional interactive statement supplied from said interactive statement conversion device (420).

11. A device as set forth in any one of Claims 1 to 10, in which
said expression information integrating device (800)
receives an emotion parameter, selects a multimedia scenario corresponding to the input emotion parameter from a plurality of multimedia scenarios prepared in advance, and according to the selected multimedia scenario, performs layout processing and output synchronization processing in sound and image output.

12. A device as set forth in any one of Claims 1 to 11, further comprising
an expression creating device (600) for creating an expression for representing emotion based on the emotion parameter supplied from said emotion creating device (200), in which
said expression information integrating device (800)
receives an emotion parameter, selects a multimedia scenario corresponding to the input emotion parameter from a plurality of multimedia scenarios prepared in advance, and according to the selected multimedia scenario, performs layout processing and output synchronization processing in sound and image output.

13. A device as set forth in any one of Claims 1 to 12, comprising
an emotion judging device (250) for judging an emotion included in an input interactive statement and supplying the same as an emotion parameter, instead of said emotion creating device (200).

14. A device as set forth in any one of Claims 1 to 13, comprising
an emotion judging device (250) for judging an emotion included in an input interactive statement and supplying the same as an emotion parameter, instead of said emotion creating device (200),
said emotion judging device (250) further including
a keyword extracting device (260) for extracting keywords included in an input interactive statement,
a keyword-emotion parameter correspondence table (275) with each emotion parameter recorded correspondingly to each keyword, and
a keyword-emotion parameter conversion device (270) for supplying an emotion parameter recorded in said keyword-emotion parameter correspondence table (275) correspondingly to a keyword extracted by said keyword extracting device (260).

15. A computer readable memory for storing an emotion expressing program for expressing emotions of a virtual pseudo creature by controlling a computer,
the emotion expressing program comprising:
a step of performing emotion creating processing for deciding and supplying an emotion parameter of an artificial agent;
a step of performing expression information integrating processing for performing layout processing and output synchronization processing in sound and image output according to a multimedia scenario; and
a step of performing at least one of sound creating processing for creating a sound for representing emotion based on the emotion parameter supplied through said emotion creating processing, emotional interactive statement creating processing for creating words for representing emotion based on the emotion parameter, and movement creating processing for creating movements for representing emotion based on the emotion parameter.

16. A computer readable memory for storing an emotion expressing program as set forth in Claim 15,
the emotion expressing program comprising
a step of performing expression creating processing for creating an expression for representing emotion based on the emotion parameter supplied through said emotion creating processing.

17. A computer readable memory for storing an emotion expressing program as set forth in Claim 15 or 16,
said sound creating processing of the emotion expressing program includes
sound selecting processing for retrieving a sound corresponding to an input emotion parameter from said sound database which previously stores a plurality of sounds for representing emotions as sound data.

18. A computer readable memory for storing an emotion expressing program as set forth in Claim 15, 16 or 17,
the emotion expressing program comprising
a step of performing expression creating processing for creating an expression for representing emotion based on the emotion parameter supplied through said emotion creating processing,
said sound creating processing including
sound selecting processing for retrieving a sound corresponding to an input emotion parameter from said sound database which previously stores a plurality of sounds for representing emotions as sound data.

19. A computer readable memory for storing an emotion expressing program as set forth in Claim 15, 16, 17 or 18,
said sound creating processing of the emotion expressing program including
waveform edit parameter creating processing for supplying a waveform edit parameter depending on an input emotion parameter, and
waveform edit processing for performing amplitude envelope processing, pitch envelope processing, and effect processing of a reference sound stored in said sound reference database which stores reference sounds to be subjected to waveform edit, according to the waveform edit parameter supplied through said waveform edit parameter creating processing.

20. A computer readable memory for storing an emotion expressing program as set forth in Claim 15, 16, 17, 18 or 19,
the emotion expressing program comprising
a step of performing expression creating processing for creating an expression for representing emotion based on the emotion parameter supplied through said emotion creating processing,
said sound creating processing of the emotion expressing program including
waveform edit parameter creating processing for supplying a waveform edit parameter depending on an input emotion parameter, and
waveform edit processing for performing amplitude envelope processing, pitch envelope processing, and effect processing of a reference sound stored in said sound reference database which stores reference sounds to be subjected to waveform edit, according to the waveform edit parameter supplied through said waveform edit parameter creating processing.

21. A computer readable memory as set forth in any one of Claims 15 to 20,
said emotional interactive statement creating processing of the emotion expressing program including at least one of
emotional word creating processing for creating an emotional word corresponding to an input emotion parameter and interactive statement conversion processing for converting an input interactive statement into an emotional interactive statement based on the emotion parameter.

22. A computer readable memory as set forth in any one of Claims 15 to 21,
the emotion expressing program comprising
a step of performing expression creating processing for creating an expression for representing emotion based on the emotion parameter supplied through said emotion creating processing,
said emotional interactive statement creating processing of the emotion expressing program including at least one of
emotional word creating processing for creating an emotional word corresponding to an input emotion parameter and interactive statement conversion processing for converting an input interactive statement into an emotional interactive statement based on the emotion parameter.

23. A computer readable memory as set forth in any one of Claims 15 to 22,
said emotional interactive statement creating processing of the emotion expressing program including
emotional word creating processing for creating an emotional word corresponding to an input emotion parameter,
interactive statement conversion processing for converting an input interactive statement into an emotional interactive statement based on the emotion parameter, and
words creating processing for creating words in combination of an emotional word supplied through said emotional word creating processing and an emotional interactive statement supplied through said interactive statement conversion processing.

24. A computer readable memory as set forth in any one of Claims 15 to 23,
the emotion expressing program comprising
a step of performing expression creating processing for creating an expression for representing emotion based on the emotion parameter supplied through said emotion creating processing,
said emotional interactive statement creating processing of the emotion expressing program including
emotional word creating processing for creating an emotional word corresponding to an input emotion parameter,
interactive statement conversion processing for converting an input interactive statement into an emotional interactive statement based on the emotion parameter, and
words creating processing for creating words in combination of an emotional word supplied through said emotional word creating processing and an emotional interactive statement supplied through said interactive statement conversion processing.

25. A computer readable memory as set forth in any one of Claims 15 to 24,
said expression information integrating processing of the emotion expressing program including
a step of receiving an emotion parameter, selecting a multimedia scenario corresponding to the input emotion parameter from a plurality of multimedia scenarios prepared in advance, and according to the selected multimedia scenario, performing layout processing and output synchronization processing in sound and image output.

26. A computer readable memory as set forth in any one of Claims 15 to 25,
the emotion expressing program comprising
a step of performing expression creating processing for creating an expression for representing emotion based on the emotion parameter supplied through said emotion creating processing,
said expression information integrating processing of the emotion expressing program including
a step of receiving an emotion parameter, selecting a multimedia scenario corresponding to the input emotion parameter from a plurality of multimedia scenarios prepared in advance, and according to the selected multimedia scenario, performing layout processing and output synchronization processing in sound and image output.

27. A computer readable memory as set forth in any one of Claims 15 to 26,
the emotion expressing program comprising
a step of performing emotion judging processing for judging an emotion included in an input interactive statement and supplying the same as an emotion parameter, instead of said emotion creating processing.

28. A computer readable memory as set forth in any one of Claims 15 to 27,
the emotion expressing program comprising
a step of performing emotion judging processing for judging an emotion included in an input interactive statement and supplying the same as an emotion parameter, instead of said emotion creating processing,
said emotion judging processing further including
keyword extracting processing for extracting keywords included in an input interactive statement, and
keyword-emotion parameter conversion processing for supplying an emotion parameter recorded in said keyword-emotion parameter correspondence table with each emotion parameter recorded correspondingly to each keyword, in accordance with the keyword extracted by said keyword extracting processing.
